# EUROPEAN PATENT SPECIFICATION

(11) **EP 0 659 594 B1**
(45) Date of publication and mention of the grant of the patent: **04.02.1998**
(21) Application number: 94309588.5
(22) Date of filing: 20.12.1994
(51) Int. Cl.: B60C 11/04

(54) **Pneumatic tyre for heavy load**
LKW-Reifen
Bandage pneumatique pour poids-lourds

(30) Priority: 27.12.1993 JP 331561/93; 07.09.1994 JP 213524/94
(43) Date of publication of application: 28.06.1995
(73) Proprietor: SUMITOMO RUBBER INDUSTRIES LIMITED, Kobe-shi, Hyogo-ken (JP)
(72) Inventor: Fukumoto, Tetsuhiro, Kobe-shi, Hyogo (JP); Kimura, Tatsuo, Akashi-shi, Hyogo (JP)
(74) Representative: Stewart, Charles Geoffrey

(56) References cited:
- EP-A- 0 313 361
- EP-A- 0 356 369
- DE-A- 2 816 626
- FR-A- 2 302 875
- US-A- 5 345 988
- DATABASE WPI Week 9402, Derwent Publications Ltd., London, GB; AN 94-011915 & JP-A-5 319 029 (YOKOHAMA TIRE&RUBBER CO LTD.) 3 December 1993
- PATENT ABSTRACTS OF JAPAN vol. 14, no. 285 (M-987) 20 June 1990 & JP-A-02 088 311 (BRIDGESTONE CORP.) 28 March 1990

## Description

The present invention relates to a pneumatic tyre for heavy loads which is adapted to prevent irregular abrasion from being generated at the shoulder-side edge of a region or land located inside the region or land of the shoulder edge.

It is necessary to control the shape of a tyre when the tyre hits the ground in order to improve the operativity and abrasion resistance of a heavy load tyre which has a tread radius and amounts of camber at the central part of the tread and the shoulder edges.

When the above shape is elliptic, in spite of the favourable operativity and wandering performance, the shoulder edges easily slip at the road surface because of the lower contact pressure in the vicinity thereof when the tyre contacts the ground, so that the shoulder edges are abraded irregularly.

If the sliding abrasion at the shoulder is reduced and the tread radius is increased, the touch pressure in the vicinity of the shoulder edge is increased and the contact length of the shoulder to the ground is increased. If the contact or touching length at the central part of the tread is maintained at a certain value to keep the operativity (linear motion stability and steering response), the touch pressure at a second region or land counted from the shoulder edge becomes lower than at the other parts, and therefore the edge of the second land is abraded non-uniformly. This irregular abrasion spread gradually all over the width of the land, leading to punching of the land.

Under the circumstances, forming a small step-like land has been proposed to eliminate the irregular abrasion described above (e.g. Japanese Patent Laid-Open Publication Nos. 2-169305, 2-88312 and 2-88311). Such a narrow stepped land or rib is also disclosed in a zig-zag tyre pattern by the generic US-A-5345988. The stepped portion is disposed between 2 and 4mm below the main land or rib body in order to improve the draining performance of the tyre.

However, in the conventional technique, the step-like land is sometimes out of touch with the ground depending on the using condition (condition of the load) which induces irregular abrasion at the edge of the second land seen from the shoulder edge. In the case where a notch is cut at a part of the second land closer to the centre of the tyre, it is disadvantageously impossible to avoid the irregular abrasion due to the twisting force brought about by the notch.

It is an object of the present invention to provide a pneumatic tyre for heavy load which can prevent irregular abrasion at the second land inside the shoulder edge, particularly at the edge of the second land at its shoulder edge side, counted from the shoulder edge.

According to the present invention, there is provided a pneumatic tyre for heavy load comprising an irregular abrasion preventing land or rib formed, by a slim groove extending in a circumferential direction of the tyre, at a shoulder side of a second rib counted from a shoulder edge and a plurality of inside notches formed at an edge of the second rib at a side where there is a second main groove, wherein the irregular abrasion preventing rib has a varying width in the circumferential direction, thereby forming wide parts of a large width and narrow parts of a smaller width in the axial direction of the tyre than the wide parts, characterised in that the irregular abrasion preventing rib is generally of the same height as a rib of the second rib excluding the irregular abrasion preventing rib when the tyre is not in use, and the inside notches at the edge of the second rib and narrow parts are alternately disposed in the circumferential direction of the tyre and the tread radius is between 450 and 700mm.

According to another aspect the invention provides a pneumatic tyre for heavy load comprising an irregular abrasion preventing rib formed, by a slim groove extending in a circumferential direction of the tyre, at a shoulder side of a second rib counted from a shoulder edge, and a plurality of inside notches at an edge of the second rib at a side where there is a second main groove, characterised by the irregular abrasion preventing rib being divided into irregular abrasion preventing blocks by lateral grooves, the irregular abrasion preventing rib being generally in the same height as a rib of the second rib excluding the irregular abrasion preventing rib when the tyre is not in use, and the irregular abrasion preventing blocks are disposed to confront the inside notches in the circumferential direction of the tyre and the tread radius is between 450 and 700mm.

These and other objects and features of the present invention will become clear from the following description taken in conjunction with the preferred embodiments thereof with reference to the accompanying drawings, in which:-
Figure 1 is a partially-enlarged plane view of part of a tread of a pneumatic tyre for heavy load according to a first embodiment of the present invention;
Figure 2 is a partially-enlarged plane view of part of a tread of a pneumatic tyre for heavy load according to a second embodiment of the present invention;
Figure 3 is a partially-enlarged plane view of part of a tread of a pneumatic tyre for heavy load according to a third embodiment of the present invention;
Figure 4 is a partially-enlarged plane view of part of a tread of a pneumatic tyre for heavy load according to a fourth embodiment of the present invention;
Figure 5 is a partially-enlarged plane view of part of a tread of a pneumatic tyre for heavy load according to a fifth embodiment of the present invention;
Figure 6 is a partially-enlarged plane view of part of a tread of a pneumatic tyre for heavy load according to a sixth embodiment of the present invention;
Figure 7 is a partially-enlarged plane view of part of a tread of a pneumatic tyre for heavy load according to a seventh embodiment of the present invention;
Figure 8 is a partially-enlarged plane view of part of a tread of a pneumatic tyre for heavy load according to a eighth embodiment of the present invention;
Figure 9 is a diagram explanatory of the configuration of an irregular abrasion preventing land in the embodiment of the present invention;
Figure 10 is a diagram explanatory of the positional relationship of the irregular abrasion preventing land in the embodiment of the present invention;
Figure 11A is a perspective view of the tyre of Figure 1;
Figure 11B is an explanatory diagram of W and Wₒ of the tyre;
Figure 11C is an explanatory diagram of W₁, W₂, W₃, W_{4,} dₒ, d of the tyre;
Figure 11D is an explanatory diagram of Wₒ and W_{b} of the tyre;
Figure 11E is an explanatory diagram of the shape when the tyre comes in contact with the ground;
Figure 12A is an explanatory diagram of the tyre before contacting the ground;
Figure 12B is an explanatory diagram of the index of irregular abrasion;
Figure 13 is an explanatory diagram of the state of abrasion of the tyre in any of the embodiments;
Figure 14 is a partially-enlarged plan view of a tyre according to a first comparison example;
Figure 15 is a partially-enlarged plane view of a tyre according to a second comparison example;
Figure 16 is a partially-enlarged plan view of a tyre according to a third comparison example;
Figure 17 is a partially-enlarged plane view of a tyre according to a fourth comparison example; and
Figures 18A, 18B and 18C are enlarged plan views of portions of the tyres in different embodiments of the present invention.

Before the description of the present invention proceeds, it is to be noted that like parts are designated by like reference numerals throughout the accompany drawings of the different embodiments.

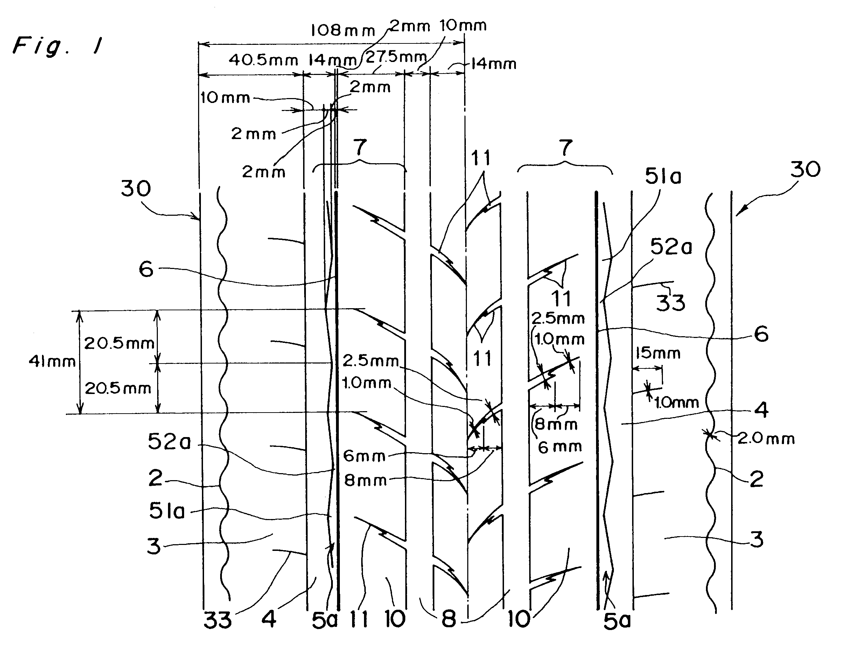

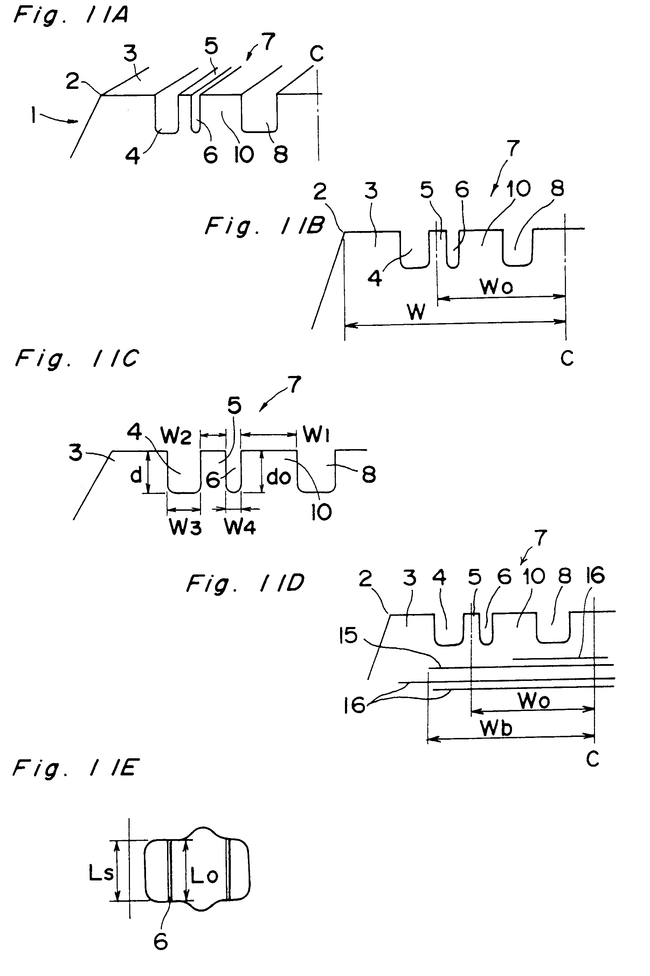

As shown in Figures 1 and 11A, the tyre has main grooves 4,8 extending continuously in the circumferential direction and regions or lands on a tread 1 of the tyre separated by the main grooves. More specifically, referring to Figure 1, a first land 3, a first main groove 4, a second land 7, and a second main groove 8 are formed in this order from a shoulder edge 2 to the centre C of the tread 1. The second land 7 has, at its shoulder side, a slim irregular abrasion preventing land 5a separated from a main body 10 of the second land 7 by a narrow or slim groove 6. The main body 10 is hence the remaining part of the second land 7 with the irregular abrasion preventing land 5a excluded. Inside notches 11 are formed every predetermined distance at the other side edge of the main body closer to the centre of the tyre. The notches are slots or sipes, etc., to ensure traction. Reference numeral 33 in Figure 1 denotes a notched part in the first land 3.

When the tyre is new or not in use, the above-described preventing land 5a is generally of the same height is the main body 10. It also varies in width around the circumferential direction of the tyre. In other words, the preventing land 5a has such a flat configuration that the land 5a has wide parts 51a projecting in a generally triangular shape into the main groove 4 and narrow parts 52a recessed in a triangular shape which are continuously alternately arranged. Each wide part 51a is located at a confronting position to an end of the inside notch 11. The narrow parts 52a are alternately positioned to the end parts of the inside notches 11 in the circumferential direction of the tyre.

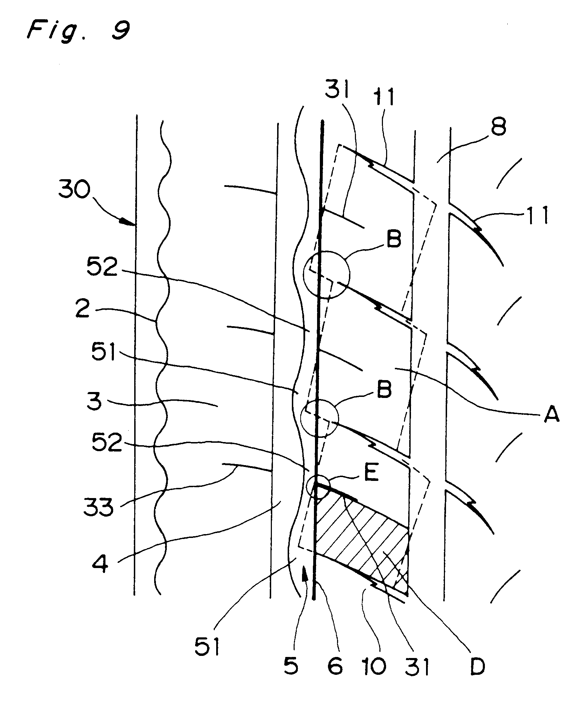

The operation of the formation of the wide and narrow parts as above will now be described in conjunction with Figure 9. When a vehicle turns, a land A which is the part between the adjacent two inside notches 11 and is a part of the main body 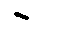 10 is apt to be twisted in a direction shown by the broken line (in the clockwise direction) or in the opposite direction thereto. Because of the twist, the distortion of the tread rubber at a part B is increased, generating the irregular abrasion which spreads in time from the part B to the whole of the land. If the irregular abrasion preventing land 5 adjacent to the part B is formed to be wide in the circumferential direction of the tyre to enhance the rigidity, the distortion of the part B is decreased and the difference of the distortion at the outer side in the axial direction of the main body is reduced. The irregular abrasion can be accordingly prevented. In other words, since the slim groove 6 is narrow in width, the preventing land 5 is allowed to come in touch with the main body 10 when the tyre touches the ground, so that the aforementioned interaction is effected.

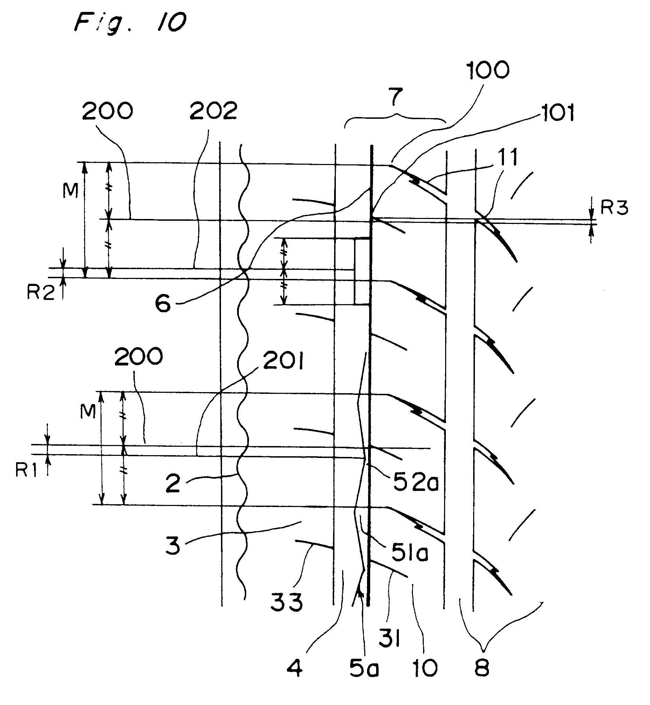

The positional relationship of the narrow parts 52a and the inside notches 11 will be depicted with reference to Figure 10. In Figure 10, a reference position for each inside notch 11 in the circumferential direction of the tyre is set at an outer end 100 in the axial direction of the inside notch 11. Although it is desired that a line 200 in the direction of the centre axis a distance M between the outer end 100 and an outer end of the adjacent inside notch 11 agrees with the line 201 in the direction of the centre axis of the narrow part 52a of the preventing land 5, it is allowable even if the amount shift R1 therebetween is not larger than 0.3 times, more preferably, not larger than 0.2 times the distance M of the adjacent inside notches 11. When the shifting amount is larger than the above value, it is impossible to prevent irregular abrasion caused by the twisting force of the main body 10.

More specifically, a specific example of the first embodiment is of such size as shown in Figure 1. The width of the first main groove 4 is 14mm and the wide part 51a and the narrow part 52a of the irregular abrasion preventing land 5a have respectively 4mm maximum width and 2mm minimum width. The width of the slim groove 6 is 2mm, the distance between the centres of the wide and narrow parts 51a and 52a is 20.5mm, while the distance from a touching End 30 of the tyre in contact with the ground to an outer side edge of the first main groove 4 is 40.5mm. The distance to the centre of the tyre from the contacting end 30 is 108mm. The main body 10, the second main groove 8, and the inside notch 11 in the widthwise direction of the tyre are 27.5mm wide, 10mm wide, and 14mm wide, respectively. Moreover, a 2.5mm-width wide part and a lmm-width narrow part of the inside notch 11 are 6mm and 8mm long in the widthwise direction of the tyre. The inside notch 11 is formed 11.0mm deep. The first and second main grooves 4,8 are 14mm in depth, whereas the slim groove 6 is 11mm in depth. The notched part 33 of the first land 3 has 1.0mm width. The tyre is 15mm wide in the circumferential direction thereof and 11.0mm deep. The shoulder edge is 2.0mm wide and 11mm deep. The distance M between outer ends of the adjacent notches 11 in the axial direction is 41mm. In the first embodiment, the centre of the narrow part 52a of the preventing land 5a is positioned at the centre of the distance between the adjacent two inside notches 11.

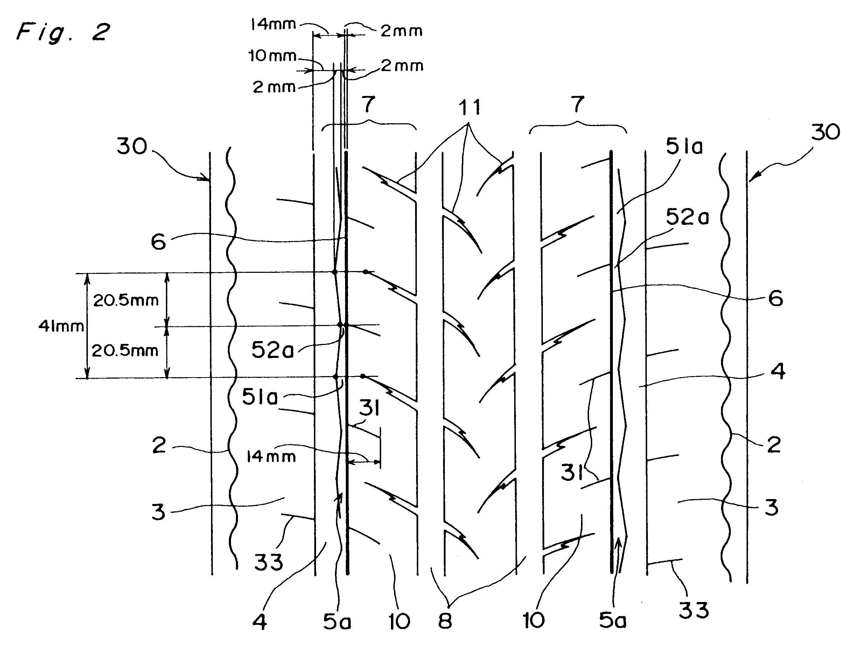

In the second embodiment shown in Figure 2, many outside notches 31 are formed at predetermined distances apart at the side of the irregular abrasion preventing land 5a of the main body 10 of the tyre of the first embodiment in Figure 1. Since the outside notches 31 are alternately arranged to the inside notches 11 in the circumferential direction, the twisting part of the land is turned to a partial land D of the land A (also shown in Figure 9). The partial land D is smaller than the land A, reducing the distance from the part B where the distortion is large to the twisting centre, so that the amount of distortion of the part B is lessened. Therefore, the irregular abrasion at the part B is effectively prevented. An adequate amount of movement is permitted in the vicinity of an outer end E of the outside notch 31 in the axial direction, and consequently the distortion is not so large as at the above part B. If the number of the inside notches 11 is increased to be twice instead of forming the outside notches 31, the rigidity in the middle part of the adjacent inside notches 11 is decreased so much as to cause missing or loss of rubber, etc.

As is clear from Figure 10, when the reference position of the outside notch 31 in the circumferential direction of the tyre is set at an outer end 101 of the outside notch 31 in the axial direction, it is desirable that the line 200 in the direction of the centre axis of the distance M between the outer ends 100 of the adjacent inside notches 11 in the axial direction agrees with the above outer end 101. However, if the line 200 shifts from the outer end 101, the shifting amount R3 is preferably not larger than 0.3 times the distance M, more favourably, not larger than 0.2 times the distance M. It becomes impossible to prevent the irregular abrasion due to the twisting force of the main body 10 if the shifting amount R3 exceeds the aforementioned value.

The size of each part in the second embodiment in a specific example is generally the same as that of the first embodiment, except that the outside notch 31 is 14mm wide in the circumferential direction of the tyre and 11.0mm deep.

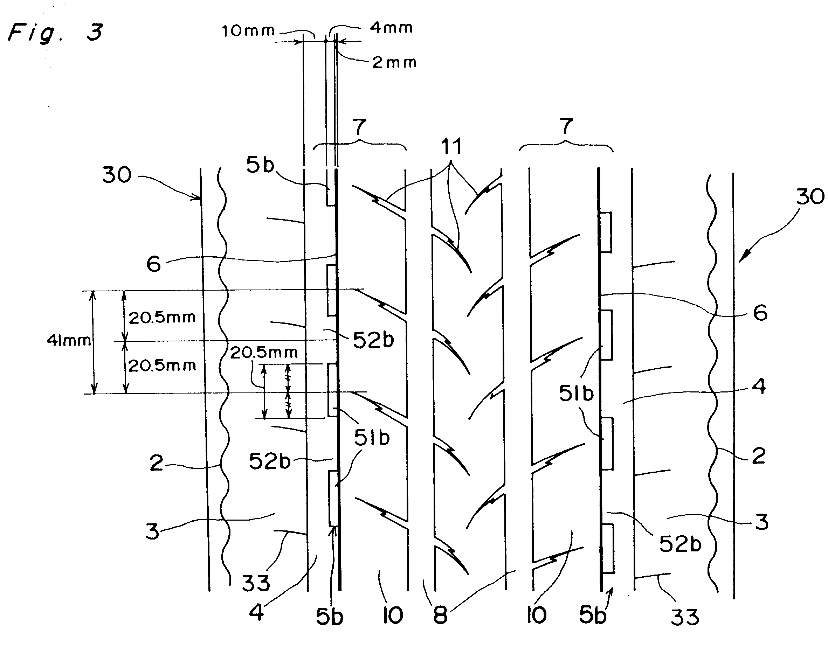

Figure 3 shows a pneumatic tyre for heavy load according to a third embodiment of the present invention.

An irregular abrasion preventing land 5b in the tyre of the third embodiment assumes a different shape from that of the preventing land 5a of the first embodiment. That is, the irregular abrasion preventing land 5b of the third embodiment is constituted of rectangular, flat irregular abrasion preventing blocks 51b divided by lateral grooves 52b communicating with the first main groove 4 and extending in the widthwise direction of the tyre.

The irregular abrasion preventing blocks 51b are generally of the same height as the main body 10 when the tyre is new and are so disposed as to confront the inside notches 11 in the circumferential direction.

Referring again to Figure 10, although it is suitable that the outer end 100 of the inside notch 11 agrees with the line 202 in a direction of the centre axis of the preventing block 51b, the shifting amount R2 if any should be not larger than 0.3 times, more favourably, 0.2 times the distance M of the adjacent inside notches 11. In the event that value 0.3 is exceeded, irregular abrasion as a result of the twisting force of the main body 10 is impossible to avoid.

The tyre according to the third embodiment as a specific example is constituted generally in the same size as in the first embodiment. The difference is that the preventing block 51b is 4mm wide and 20.5mm long, and the lateral groove 52b is 4mm wide and 20.5mm long. The centre of the preventing land 5b is agreed with the outer end of the inside notch 11 in the third embodiment.

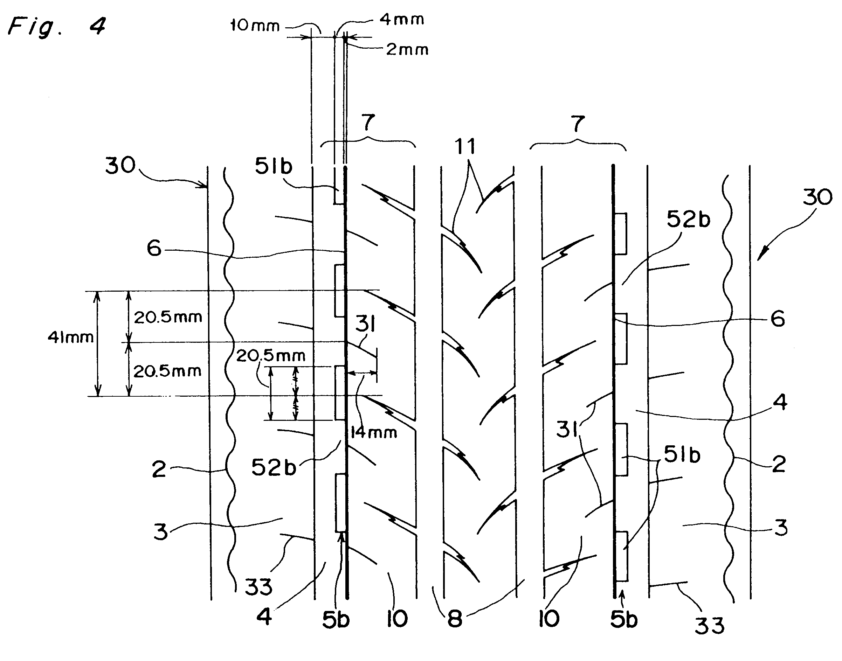

The tyre of the fourth embodiment, shown in Figure 4, has many outside notches 31 formed at predetermined distances at the side of the irregular abrasion preventing land 5b of the main body 10 of the tyre of the third embodiment shown in Figure 3. The outside notches 31 are alternately disposed to the inside notches 11 in the circumferential direction of the tyre. The reason for this arrangement is the same as that described above in conjunction with the second embodiment.

Concretely, the fourth embodiment as a specific example is different in size from the third embodiment only in the outside notch 31 is 14mm wide and 11.0mm deep.

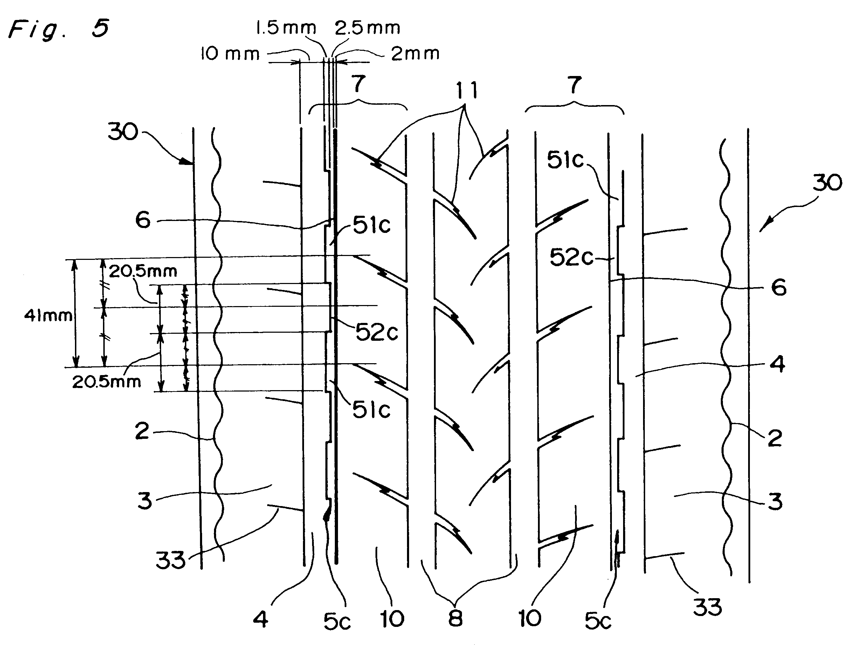

The tyre of the fifth embodiment of Figure 5 is provided with an irregular abrasion preventing land 5c which is different in shape from that of the first embodiment. More specifically, wide parts 51c of the irregular abrasion preventing land 5c which correspond to the preventing blocks 51b of the preventing land 5b in the third and fourth embodiments are integrally coupled to each other at narrow parts 52c. When the tyre is new or not in use the preventing land 5c has generally the same height as the main body 10, with the wide parts 51c arranged to confront the inside notches 11 in the circumferential direction of the tyre.

The size of the tyre according to the fifth embodiment of the present invention as a specific example is generally the same as that of the first embodiment. The difference is that the wide part 51c has a 4mm width and 20.5mm length, and the narrow part 52c has a 2.5mm width and a 20.5mm length. In the fifth embodiment of the present invention, the centre of the wide part 51c is aligned with the outer end of the inside notch 11.

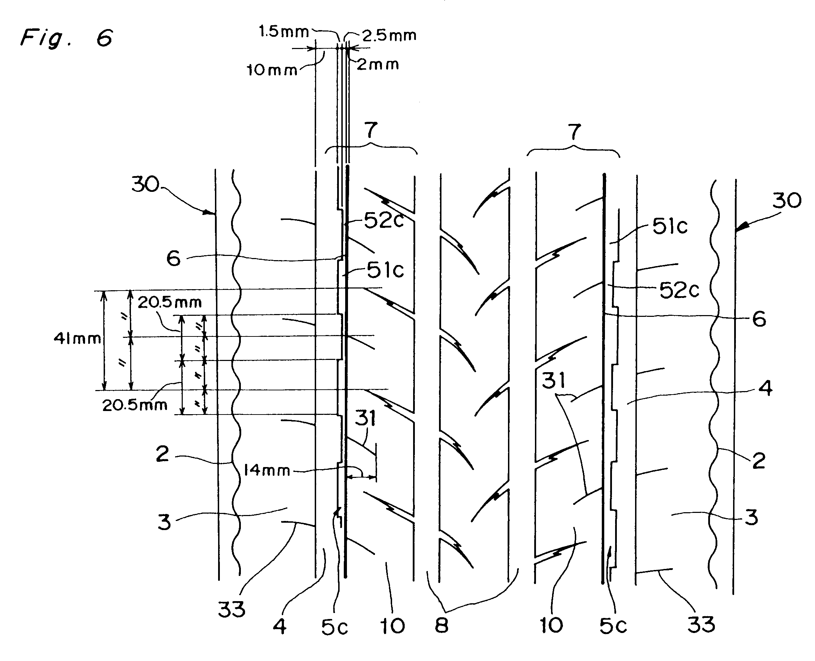

According to the sixth embodiment of Figure 6, many outside notches 31 are formed at predetermined distances at the side of the irregular abrasion preventing land 5c of the main body 10 of the tyre of the above fifth embodiment shown in Figure 5. The outside notches 31 and the inside notches 11 are alternately arranged in the circumferential direction of the tyre by the same reason as in the second embodiment.

The tyre of the sixth embodiment as a specific example is in the structure of generally the same size as that of the fifth embodiment except that each outside notch 31 has a 14mm width and 11.0mm depth.

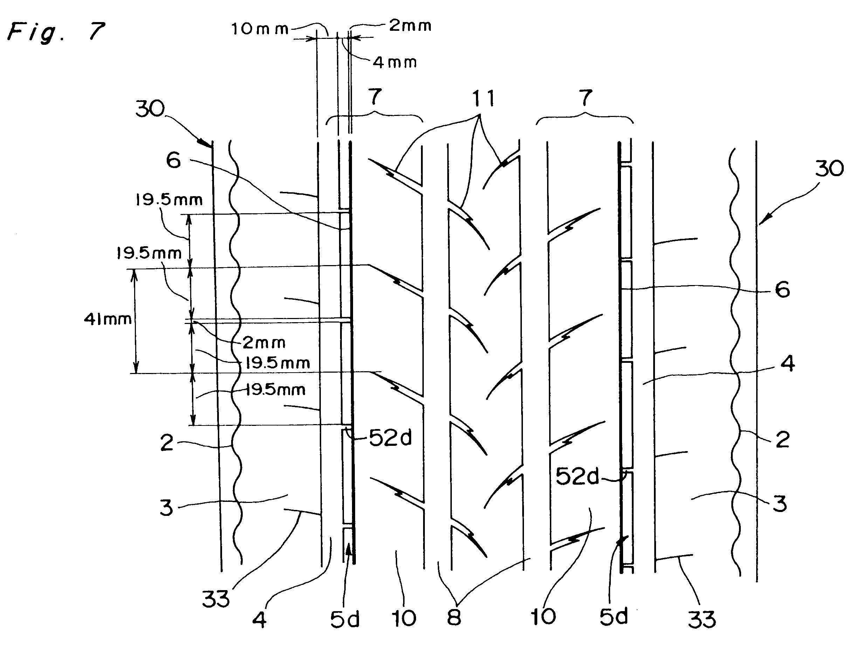

The irregular abrasion preventing land 5d in the seventh embodiment of Figure 7 is different in size from the land 5a of the first embodiment. In other words, the irregular abrasion preventing land 5d is formed of many rectangular flat irregular abrasion preventing blocks 51d divided by lateral grooves 52d communicating with the first main groove 4 and extending along the widthwise direction of the tyre. The lateral groove 52d has small width. The preventing blocks 51d are generally in the same height as the main body 10 when the tyre is new, and confront the inside notches 11 in the circumferential direction

The tyre of the seventh embodiment as a specific example has generally the same size as that of the first embodiment with an exception that the preventing block 5d has 4mm width and 39mm length, while the lateral groove 52d has 4mm width and 2mm length. According to the seventh embodiment, the centre of the preventing block 51d is aligned with the outer end of the inside notch 11.

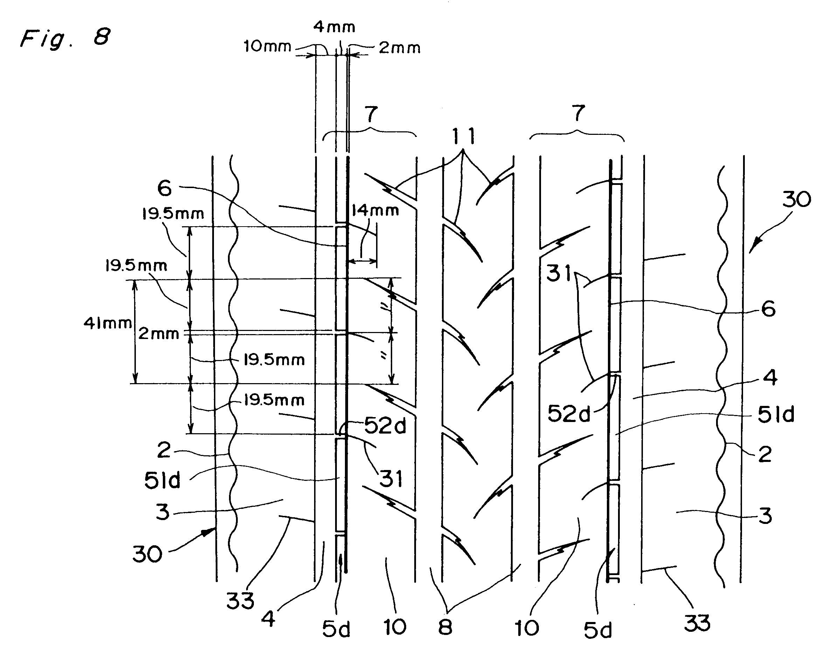

A pneumatic tyre for heavy load of an eighth embodiment according to the present invention is clearly shown in Figure 8. The tyre has many outside notches 31 formed at predetermined distances at the side of the irregular abrasion preventing land 51d of the main body 10 of the tyre in Figure 7, namely, the seventh embodiment. The outside notches 31 are alternately disposed to the inside notches 11 in the circumferential direction of the tyre, the reason for which reads the same as in the second embodiment discussed before.

Although the tyre of the eighth embodiment as a specific example has generally the same size as that of the seventh embodiment, the outside notch 31 is 14mm wide.

Referring to Figure 11B, in any of the foregoing embodiments, supposing that the distance from the centre C of the tyre in the widthwise direction of the tyre shoulder edge 2 is W and the distance from the centre C to the centre of the irregular abrasion preventing land 5 at the side of the shoulder is Wₒ, the irregular abrasion preventing land 5 (specifically, the wide parts 51,51c of the preventing lands 5a,5c in the first, second, fifth and sixth embodiments, and the irregular abrasion preventing blocks 51b,51d of the respective preventing lands 5b,5d in the third, fourth, seventh and eighth embodiments) is so positioned as to satisfy 0.50≤(Wₒ/W)<0.85. The reason for this is that the difference in the outer diameter of edges of lands inside 1/4 the width of the tread (where Wₒ/W=0.50) to the centre of the tyre is small and the pressure when the tyre comes in contact with the ground is nearly uniform, hence without the need to eliminate slipping of the tyre by means of the edge of the land 5. If (Wₒ/W) is not smaller than 0.85, the shoulder land becomes too small in width, losing rigidity. In consequence of this, the tyre is unable to take a good grip on the ground at the cornering time and the turning performance is deteriorated.

Further, referring to Figure 11C, supposing that the width of the land 10 excluding the irregular abrasion preventing land 5 in the second land 7 from the shoulder edge 2 is W₁ (or W₂ for the wide parts 51a,51c of the irregular abrasion preventing lands 5a,5c in the first, second, fifth and sixth embodiments and for the irregular abrasion preventing blocks 51b,51d in the third, fourth, seventh and eighth embodiments), the width of the irregular abrasion preventing land 5 is W₂, the width of the first main groove 4 from the shoulder edge 2 is W₃, the width and depth of the slim groove 6 defined between the land 5 and the main body 10 of the second land 7 are designated by W₄ and dₒ, and the depth of the first main groove 4 is d, where 1/3≤(dₒ/d)≤1, 0.03≤(W₂/W₁)≤0.20 and moreover (W₄/W₃)≤0.20. It is not effective if the depth dₒ is too small. If (W₂/W₁) is smaller than 0.03, the rigidity of the preventing land 5 is lowered too much, and therefore the preventing land bends in the axial direction when the tyre hits the ground, deteriorating the effect thereof. Meanwhile, in order for the preventing land 5 to work efficiently even when the transverse force is impressed to the turning tyre of a turning vehicle, it is more suitable that (W₂/W₁) is 0.1 or larger. If (W₂/W₁) exceeds 0.2, the difference of the rigidity between the land 5 and the main body 10 is decreased, making it impossible to concentrate the abrasion force on the preventing land 5. Furthermore, even when (dₒ/d) is larger than 1, the effect of the preventing land 5 hardly changes and the gauge under the bottom of the groove cannot be made uniform due to the increased depth dₒ. The slim groove 6 is sufficiently useful even in the case where the slim groove 6 is formed by being cut by a knife of the like so as to have only a small width. The width W₄ of the slim groove 6 is therefore 3.0mm or smaller, more preferably, 2.0mm or smaller. If the slim groove 6 is wider, the main body 10 never comes in contact with the preventing land 5 when the tyre contacts the ground, and the interaction described earlier is not fulfilled, making it impossible to prevent the irregular abrasion of the main body 10.

As in Figure 11D, it is so arranged that the width W_{b} of a second longest breaker 15 from the centre C of the tyre satisfies 0.60≤(Wₒ/W_{b}) ≤0.90, because it is not effective to provide the irregular abrasion preventing land 5 in the vicinity of an edge of the second longest breaker 15. That is, it is favourable to set the preventing land 5 at a region where the rigidity of a breaker of three layers is constant.

Referring further to Figures 11E and 12A, assuming that Lₛ indicates the length of the tyre in the circumferential direction when the tyre is in contact with the ground at the outermost circumference and Lₒ is the length at the centre of the slim groove 6 in the circumferential direction of the tyre in contact with the ground, the shape of the tyre at this time is such that 0.95≤(Lₒ/Lₛ)≤1.15. The tread radius (TR) is suitably 450-700. In the event that the tread radius exceeds 700 or (Lₒ/Lₛ) is smaller than 0.95, the central part of the second land 7 is irregularly abraded more, resulting in punching abrasion. If the tread radius is smaller than 450 or (Lₒ/Lₛ) is larger than 1.15, then substantial irregular abrasion results in the vicinity of the shoulder edge 2 and no effect is attained from the preventing land.

When W₅ is the width of the slim groove 6 when the tyre is in contact with the ground and W₄ is the width of the bottom of the groove 6, and moreover W_{4'} is the width of an opening at the surface of the slim groove 6, 0≤W₅<(W_{4'}/2) is satisfied in order to maintain the rigidity of the land 5 when the preventing land 5 contacts the ground.

Comparative experiments conducted between the first through eighth embodiments of the present invention and a first through fourth comparison examples will now be depicted below.

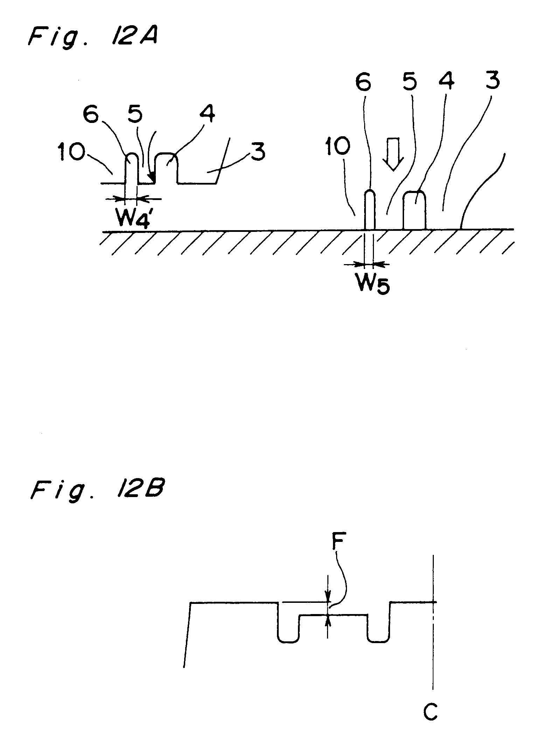

The index of irregular abrasion after a 2-2·D 10 ton truck with 11R22.5 steel radial tyres (1 steel case ply at 90°, and four layers of steel breaker) was run for 50,000km and measured. The smaller the index of irregular abrasion, the less the irregular abrasion found. Specifically, the index of irregular abrasion represents the amount F of the step difference generated at a part of the second land at the side of the shoulder (average value obtained from twice the values measured at 8 points of the second land in the circumferential direction), as shown in Figure 12B. The result of the experiments is shown in Table 1 below.

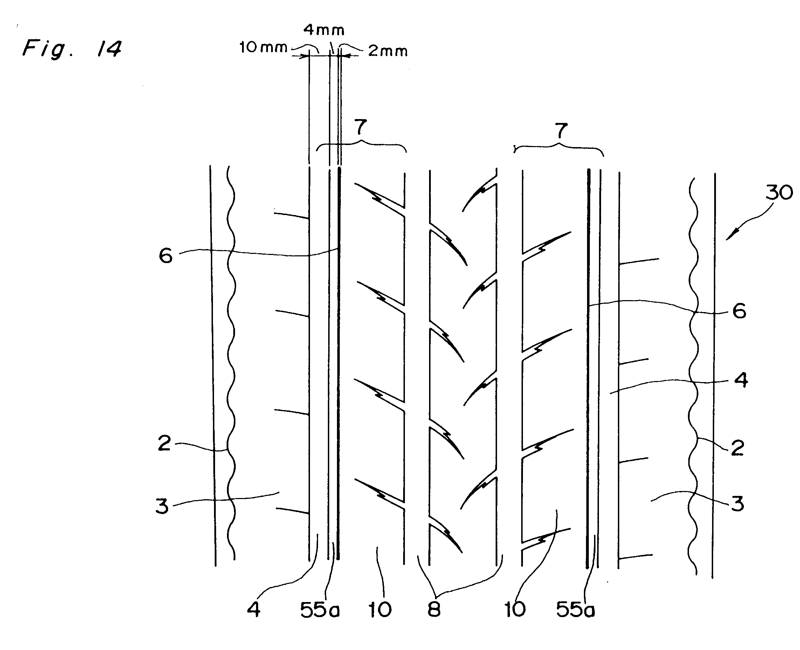

The first through fourth comparison examples are illustrated in Figures 14-17 respectively.

According to the first comparison example, unlike the first and second embodiments wherein the narrow and wide parts are alternately formed as the preventing land, an irregular abrasion preventing land 55a is shaped in the form of a simple longitudinal band having a predetermined width, for example, 4mm in the above specific example of the first embodiment, as shown in Figure 14.

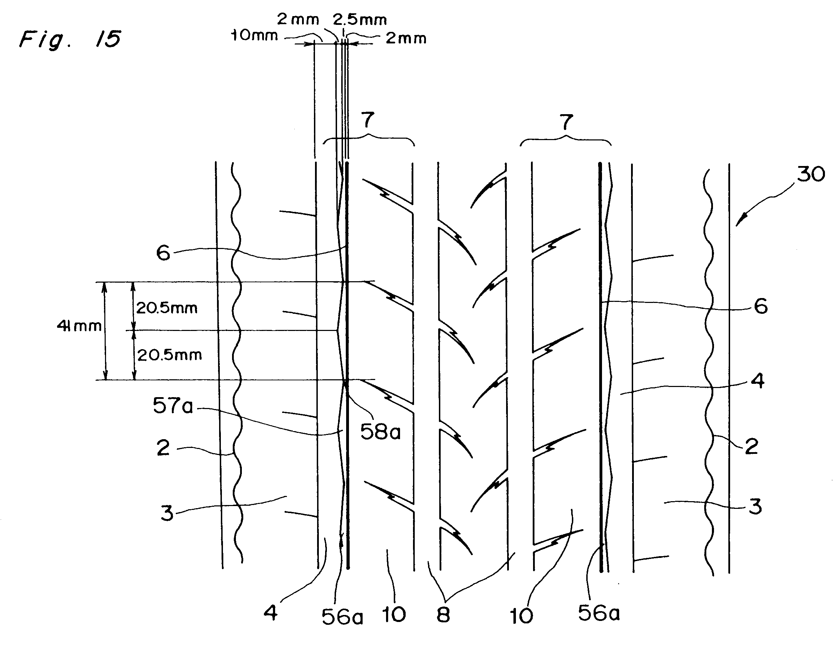

An irregular abrasion preventing land 56a in the second comparison example has, as in Figure 15, wide and narrow parts 57a and 58a similar to the irregular abrasion preventing land 5a of the first and second embodiments of the present invention. However, it is different from the first and second embodiments in that the centre of each narrow part 58a is positioned at the outer end of the inside notch 11. In the specific example of the first embodiment, the maximum width of the wide parts 57a is 2mm, the minimum width of the narrow part 58a is 2.5mm, and the distance between the centres of the narrow and wide parts 57a,58a is 20.5mm.

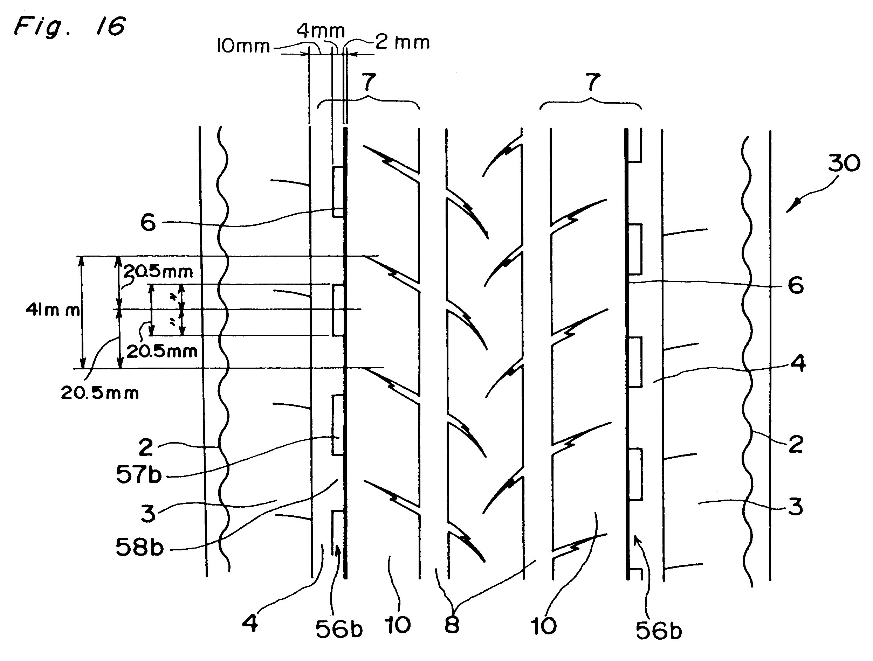

In the meantime, the irregular abrasion preventing land 56b according to the third comparison example, as shown in Figure 16, has many irregular abrasion preventing blocks 57b divided by lateral grooves 58b, similar to the irregular abrasion preventing land 5b in the third and fourth embodiments of the present invention. The centre of the lateral groove 58b in the middle of the adjacent preventing blocks 57b is at the outer end of the inside notch 11, which is different from the third and fourth embodiments. The preventing block 57b and the lateral groove 58b are each 4mm wide and 20.5mm long in the specific example of the third embodiment.

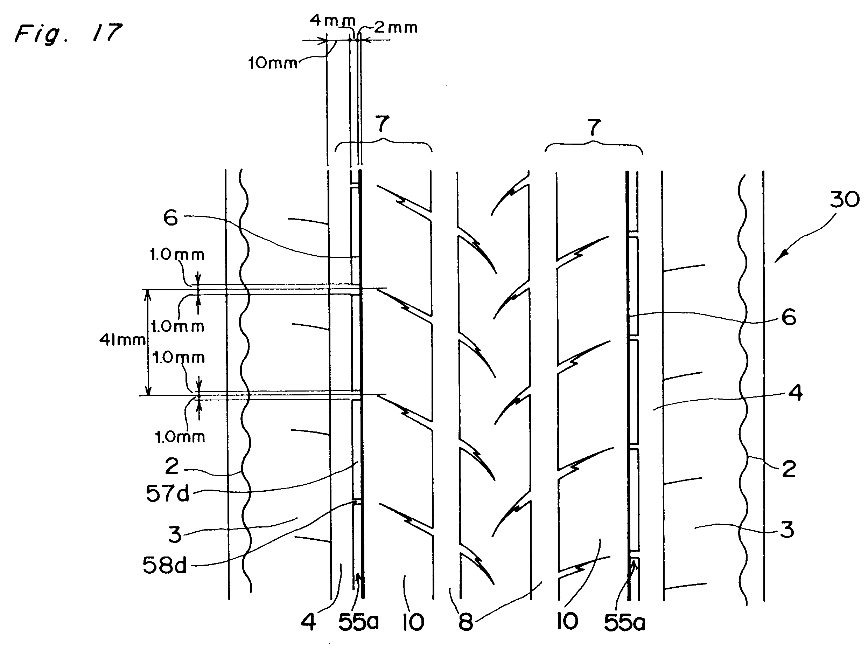

An irregular abrasion preventing land 56d in the fourth comparison example, as shown in Figure 17, has many irregular abrasion preventing blocks 57d divided by lateral grooves 58d, similar to the seventh and eighth embodiments of the present invention. However, the centre of the lateral groove 58d between the adjacent blocks 57d is set at the outer end of the inside notch 11, not similar to the irregular abrasion preventing land 5d of the seventh and eighth embodiments. In the specific example of the seventh embodiment, the preventing block 57d is 4mm wide, 39mm long, and the lateral groove 58d is 4mm wide and 2.0mm long.

**Table 1**

| | Embodiments of the Invention | | | | | | | |
|---|---|---|---|---|---|---|---|---|
| No. | 1st | 2nd | 3rd | 4th | 5th | 6th | 7th | 8th |
| Index of irregular abrasion | 140 | 145 | 130 | 135 | 140 | 145 | 115 | 120 |

| Comparison Examples | | | | | | | | |
|---|---|---|---|---|---|---|---|---|
| No. | 1st. | 2nd | 3rd | 4th | | | | |
| Index of irregular abrasion | 100 | 90 | 95 | 95 | | | | |

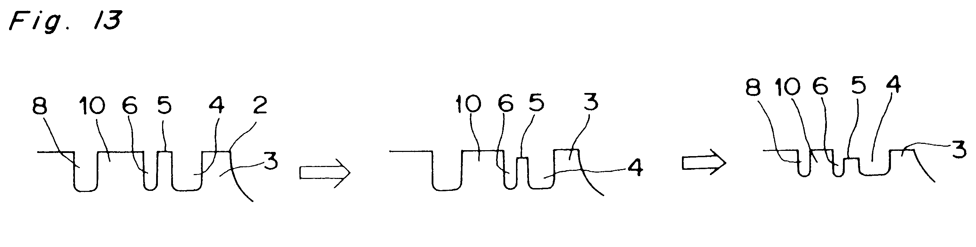

The condition of the abrasion of the tyre in each of the above embodiments is shown in Figure 13. Indication (a) of Figure 13 shows the tyre as new. With use of the tyre, the step difference sequentially increased or decreased, resulting in the abrasion as shown in indications (b) and (c) of Figure 13. Since the irregular abrasion preventing land 5 is formed generally in the same height as the main body 10, the preventing land 5 is allowed to be in contact with the road surface in any using condition, so that the irregular abrasion is effectively prevented.

In the first through eighth embodiments as above, the irregular abrasion preventing land 5 of different widths in the circumferential direction of the tyre is provided at the second land 7 at the side of the shoulder via the slim groove 6. Moreover, narrow parts of the preventing land 5 are alternately arranged to the inside notches in the circumferential direction of the tyre, or the preventing land 5 is formed of irregular abrasion blocks via the slim groove 6 only at a part where the tyre is abraded irregularly in a manner that the blocks confront the inside notches in the circumferential direction of the tyre. Therefore, while the tyre is not required to be kept extremely in an elliptic shape when contacting the ground, the irregular abrasion at the edge of the second land at the side of the shoulder which is inside the tyre can be prevented. Owing to this feature to prevent the irregular abrasion at the shoulder edge, the tyre never lacks good grip on cornering, assuring smooth running. Moreover, since the width of the irregular abrasion preventing land 5 is changed so as to prevent the second land 7 from bending, slipping of the tyre due to the bending force acting to the second land 7 from the external force through the road surface can be avoided. It is to be noted here that the effect is particularly noticeable when any of the above-described embodiments is applied to a tyre of 75% or lower aspect ratio %. As the % is increased, the sidewall shows higher rigidity and it is easier for the shape of the tyre in contact with the ground to be rectangular, or generally rectangular with a curve or recess in its up-and-down direction. Further, in each of the foregoing embodiments, the tread radius when the air pressure is standard is preferably 450-700 due to the reason that 0.95≤(Lₒ/Lₛ)≤1.15 is held thereby to prevent the irregular abrasion at the shoulder and central part of the tyre.

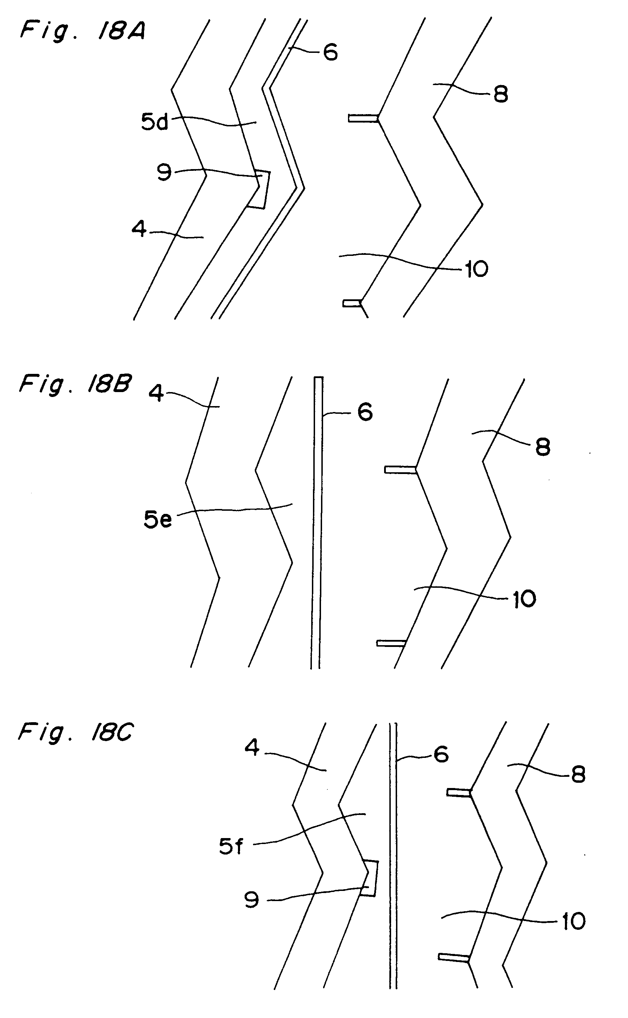

The present invention is not limited to the above first through eighth embodiments, but may be embodied in various kinds of forms. For instance, the main groove may be formed zigzag, not straight, as required. The reason is that the mechanism of the second land 7 and the irregular abrasion preventing land 5 is not changed. Concrete examples of such different embodiments are indicated in Figures 18A, 18B and 18C. In Figure 18A, both the main grooves 4,8 and the slim groove 6 are zigzag, and the irregular abrasion preventing land 5d is provided with a recessed groove 9 at the side of the shoulder. Meanwhile, in Figure 18B, the main grooves 4,8 are formed zigzag, whereas the slim groove 6 is straight, with no recessed groove 9 in the irregular abrasion preventing land 5e, Figure 18C shows an arrangement in which the main grooves 4,8 are zigzag, the slim groove 6 is straight and the irregular abrasion preventing land 5f has a recessed groove 9 as the side of the shoulder.

In the constitution of the present invention, the irregular abrasion preventing land of different widths in the circumferential direction of a tyre is arranged via the slim groove at the second land at the shoulder side. Narrow parts of the preventing land and inside notches are alternately disposed in the circumferential direction of the tyre, or the preventing land is formed of irregular abrasion blocks via the slim groove to confront the inside notches in the circumferential direction of the tyre. Therefore, even if the contact length of the shoulder is elongated to increase contact pressure of the shoulder part and consequently the contact pressure in the vicinity of the second land becomes insufficient thereby to cause slipping, the irregular abrasion is prevented at the side of the shoulder. Both the irregular abrasion of the shoulder and that of the second land are prevented. The tyre is not insufficient in grip to the ground on cornering as would result from the irregular abrasion, thus ensuring smooth running of a vehicle. Moreover, since the width of the abrasion preventing land is changed in a manner to prevent bending of the second land, the bending force to the second land against the external force from the road surface is absorbed by the preventing land, whereby slipping of the second land due to the bending force is prevented.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. A pneumatic tyre for heavy load comprising an irregular abrasion preventing rib (5) formed, by a slim groove (6) extending in a circumferential direction of the tyre, at a shoulder side of a second rib (7) counted from a shoulder edge (2) and a plurality of inside notches (11) formed at an edge of the second rib at a side where there is a second main groove (8), wherein the irregular abrasion preventing rib (5) has a varying width in the circumferential direction, thereby forming wide parts (51a,51c) of a large width and narrow parts (52a,52c) of a smaller width in the axial direction of the tyre than the wide parts, characterised in that the irregular abrasion preventing rib (5) is generally of the same height as a rib (10) of the second rib (7) excluding the irregular abrasion preventing rib (5) when the tyre is not in use, and the inside notches (11) at the edge of the second rib (7) and narrow parts (52a,52c) are alternately disposed in the circumferential direction of the tyre and the tread radius is between 450 and 700mm.

2. A pneumatic tyre for heavy load comprising an irregular abrasion preventing rib (5) formed, by a slim groove (6) extending in a circumferential direction of the tyre, at a shoulder side of a second rib (7) counted from a shoulder edge (2), and a plurality of inside notches (11) at an edge of the second rib (7) at a side where there is a second main groove (8), characterised by the irregular abrasion preventing rib (5) being divided into irregular abrasion preventing blocks (51b,51d) by lateral grooves (52b,52d), the irregular abrasion preventing rib (5) being generally of the same height as a rib (10) of the second rib excluding the irregular abrasion preventing rib (5) when the tyre is not in use, and the irregular abrasion preventing blocks (51b,51d) are disposed to confront the inside notches (11) in the circumferential direction of the tyre and the tread radius is between 450 and 700mm.

3. A pneumatic tyre for heavy load according to claim 1 or 2, characterised in that a plurality of outside notches (31) are formed in the rib (10) of the second rib (7) excluding the irregular abrasion preventing rib (5) at a side where there is the irregular abrasion preventing land (5) and so disposed as to be alternately positioned with the inside notches (11) in the circumferential direction of the tyre.

4. A pneumatic tyre for heavy load according to claim 1 or 2, characterised in that 0. 03≤(W₂/W₁)≤0.20 where W₁ is the width of the rib (10) excluding the irregular abrasion preventing rib (5) in the second rib (7) from the shoulder edge (2), and W₂ is the width of the irregular abrasion preventing rib (5).

5. A pneumatic tyre for heavy load according to claim 1 or 2, characterised in that the width W₄ of the slim groove (6) is 3.0mm or less.

6. A pneumatic tyre for heavy load according to claim 1 or 2, characterised in that 1/3≤(dₒ/d)≤1 where dₒ is the depth of the slim groove (6) defined between the rib (5) and the main body (10) of the second rib (7) and d is the depth of the first main groove (4).

7. A pneumatic tyre for heavy load according to claim 1 or 2, characterised in that R1 is a shifting amount between a line (200) in a direction in a centre axis of a distance M between an outer end (100) in an axial direction of the inside notch (11) and an outer end of the adjacent inside notch (11) and a line (201) in a direction of a centre axis of the narrow part (52a) of the preventing rib (5), and R3 is a shifting amount between the line (200) in the direction of the centre axis of the distance M between the outer ends (100) of the adjacent inside notches (11) in the axial direction and the about outer end (101), the shifting amount R1 or R3 is not larger than 0.3 times the distance M.

## Patentansprüche

1. Luftreifen für Lkw mit einer unregelmäßigen Abrieb verhindernden Rippe (5), die gebildet ist durch eine schlanke Nut (6), die sich in einer Umfangsrichtung des Reifens auf einer Schulterseite einer zweiten Rippe (7) erstreckt, gezählt von einer Schulterkante (2), und durch eine Vielzahl von inneren Kerben (11), die bei einer Kante der zweiten Rippe auf einer Seite gebildet sind, bei der es eine zweite Hauptnut (8) gibt, wobei die unregelmäßigen Abrieb verhindernde Rippe (5) eine veränderliche Breite in der Umfangsrichtung aufweist, wodurch weite Teile (51a, 51c) von einer großen Breite und schmale Teile (52a, 52c) von einer kleineren Breite in der Axialrichtung des Reifens als die weiten Teilen gebildet sind, dadurch gekennzeichnet, daß die unregelmäßigen Abrieb verhindernde Rippe (5) im allgemeinen die gleiche Höhe wie eine Rippe (10) der zweiten Rippe (7) mit Ausnahme der unregelmäßigen Abrieb verhindernden Rippe (5) aufweist, wenn der Reifen nicht in Gebrauch ist, und daß die inneren Kerben (11) bei der Kante der zweiten Rippe (7) und schmale Teile (52a, 52c) abwechselnd in der Umfangsrichtung des Reifens angeordnet sind, und daß der Laufflächenradius zwischen 450 und 700 mm beträgt.

2. Luftreifen für Lkw mit einer unregelmäßigen Abrieb verhindernden Rippe (5), die gebildet ist durch eine schlanke Nut (6), die sich in einer Umfangsrichtung des Reifens auf einer Schulterseite einer zweiten Rippe (7) erstreckt, gezählt von einer Schulterkante (2) und durch eine Vielzahl von inneren Kerben (11) bei einer Kante der zweiten Rippe (7) auf einer Seite, bei der es eine zweite Hauptnut (8) gibt, dadurch gekennzeichnet, daß die unregelmäßigen Abrieb verhindernde Rippe (5) durch Quernuten (52b, 52d) in unregelmäßigen Abrieb verhindernde Blöcke (51b, 51d) geteilt ist, daß die unregelmäßigen Abrieb verhindernde Rippe (5) in allgemeinen die gleiche Höhe wie eine Rippe (10) der zweiten Rippe mit Ausnahme der unregelmäßigen Abrieb verhindernde Rippe (5) aufweist, wenn der Reifen nicht in Gebrauch ist, und daß die unregelmäßigen Abrieb verhindernden Blöcke (51b, 51d) so angeordnet sind, daß sie den inneren Kerben (11) in der Umfangsrichtung des Reifens entgegengestellt sind, und daß der Laufflächenradius zwischen 450 und 700 mm beträgt.

3. Luftreifen für Lkw nach Anspruch 1 oder 2, dadurch gekennzeichnet, daß eine Vielzahl von äußeren Kerben (31) in der Rippe (10) der zweiten Rippe (7) mit Ausnahme der unregelmäßigen Abrieb verhindernden Rippe (5) auf einer Seite gebildet ist, bei der es den unregelmäßigen Abrieb verhindernden Landabschnitt (5) gibt, und daß diese so angeordnet sind, daß sie abwechselnd mit den inneren Kerben (11) in der Umfangsrichtung des Reifens positioniert sind.

4. Luftreifen für Lkw nach Anspruch 1 oder 2, dadurch gekennzeichnet, daß 0,03 ≤ (W₂/W₁) ≤ 0,20, wobei W₁ die Breite der Rippe (10) mit Ausnahme der unregelmäßigen Abrieb verhindernden Rippe (5) in der zweiten Rippe (7) von der Schulterkante (2) ist, und W₂ die Breite der unregelmäßigen Abrieb verhindernden Rippe (5) ist.

5. Luftreifen für Lkw nach Anspruch 1 oder 2, dadurch gekennzeichnet, daß die Breite W₄ der schlanken Nut (6) 3,0 mm oder weniger beträgt.

6. Luftreifen für Lkw nach Anspruch 1 oder 2, dadurch gekennzeichnet, daß 1/3 ≤ (d₀/d) ≤ 1, wobei d₀ die Tiefe der schlanken Nut (6) ist, die zwischen der Rippe (5) und dem Hauptkörper (10) der zweiten Rippe (7) definiert ist, und d die Tiefe der ersten Hauptnut (4) ist.

7. Luftreifen für Lkw nach Anspruch 1 oder 2, dadurch gekennzeichnet, daß R1 ein Verschiebungsausmaß zwischen einer Linie (200) in einer Richtung in einer Mittelachse einer Entfernung M zwischen einem äußeren Ende (100) in einer Axialrichtung der inneren Kerbe (11) und einem äußeren Ende der benachbarten inneren Kerbe (11) und einer Linie (201) in einer Richtung einer Mittelachse des schmalen Teils (52a) der Verhinderungsrippe (5) ist, und R3 ein Verschiebungsausmaß zwischen der Linie (200) in der Richtung der Mittelachse der Entfernung M zwischen den äußeren Enden (100) der benachbarten inneren Kerben (11) in der Axialrichtung und dem ungefähren äußeren Ende (101) ist, wobei das Verschiebungsausmaß R1 oder R3 nicht größer als das 0,3-fache der Entfernung M beträgt.

## Revendications

1. Pneumatique pour charges élevées, comprenant une nervure (5) destiné à empêcher l'usure irrégulière, formée par une gorge étroite (6) qui s'étend dans une direction circonférentielle du pneumatique, d'un côté d'un épaulement d'une seconde nervure (7) comptée depuis un bord d'épaulement (2), et plusieurs encoches internes (11) formées à un bord de la seconde nervure d'un côté auquel il existe une seconde gorge principale (8), dans lequel la nervure (5) destinée à empêcher l'usure irrégulière a une largeur variable dans la direction circonférentielle et forme ainsi des parties larges (51a, 51c) de grande largeur et des parties étroites (52a, 52c) de plus petite largeur que les parties larges, dans la direction axiale du pneumatique, caractérisé en ce que la nervure (5) destinée à empêcher l'usure irrégulière a de façon générale la même hauteur qu'une nervure (10) de la seconde nervure (7) à l'exclusion de la nervure (5) destinée à empêcher l'usure irrégulière lorsque le pneumatique n'est pas utilisé, et les encoches internes (11) formées au bord de la seconde nervure (7) et les parties étroites (52a, 52c) sont disposées en alternance dans la direction circonférentielle du pneumatique, et le rayon de la bande de roulement est compris entre 450 et 700 mm.

2. Pneumatique pour charges élevées, comprenant une nervure (5) destinée à empêcher l'usure irrégulière, formée par une gorge étroite (6) qui s'étend dans la direction circonférentielle du pneumatique, à un côté d'épaulement d'une seconde nervure (7) comptée depuis un bord d'épaulement (2), et plusieurs encoches internes (11) placées à un bord de la seconde nervure (7) d'un côté auquel il existe une seconde gorge principale (8), caractérisé en ce que la nervure (5) destinée à empêcher l'usure irrégulière est divisée en blocs (51b, 51d) destinés à empêcher l'usure irrégulière par des gorges latérales (52b, 52d), la nervure (5) destinée à empêcher l'usure irrégulière ayant de façon générale la même hauteur qu'une nervure (10) de la seconde nervure à l'exclusion de la nervure (5) destinée à empêcher l'usure irrégulière lorsque le pneumatique n'est pas utilisé, et les blocs (51b, 51d) destinés à empêcher l'usure irrégulière sont disposés afin qu'ils soient en face des encoches internes (11) dans la direction circonférentielle du pneumatique, et le rayon de la bande de roulement est compris entre 450 et 700 mm.

3. Pneumatique pour charges élevées selon la revendication 1 ou 2, caractérisé en ce que plusieurs encoches externes (31) sont formées dans la nervure (10) de la seconde nervure (7) à l'exclusion de la nervure (5) destinée à empêcher l'usure irrégulière d'un côté auquel existe la portée (5) destinée à empêcher l'usure irrégulière, avec une disposition telle que ces encoches sont disposées en alternance avec les encoches internes (11) dans la direction circonférentielle du pneumatique.

4. Pneumatique pour charges élevées selon la revendication 1 ou 2, caractérisé en ce qu'il correspond à la relation 0,03 ≤ (W₂/W₁) ≤ 0,20, W₁ étant la largeur de la nervure (10) à l'exclusion de la nervure (5) destinée à empêcher l'usure irrégulière dans la seconde nervure (7) depuis le bord d'épaulement (2), et W₂ est la largeur de la nervure (5) destinée à empêcher l'usure irrégulière.

5. Pneumatique pour charges élevées selon la revendication 1 ou 2, caractérisé en ce que la largeur W₄ de la gorge étroite (6) est inférieure ou égale à 3,0 mm.

6. Pneumatique pour charges élevées selon la revendication 1 ou 2, caractérisé par la relation 1/3 ≤ (dₒ/d) ≤ 1, dₒ étant la profondeur de la gorge étroite (6) délimitée entre la nervure (5) et le corps principal (10) de la seconde nervure (7), et d étant la profondeur de la première gorge principale (4).

7. Pneumatique pour charges élevées selon la revendication 1 ou 2, caractérisé en ce que R1 est l'amplitude du décalage entre une droite (200) placée dans la direction de l'axe central avec une distance M entre l'extrémité externe (100) dans la direction axiale de l'encoche interne (11) et une extrémité externe de l'encoche interne adjacente (11), et une droite (201) placée dans la direction de l'axe central de la partie étroite (52a) de la nervure (5) destinée à empêcher l'usure irrégulière, et R3 est l'amplitude du décalage entre la droite (200) dans la direction de l'axe central avec une distance M entre les extrémités externes (100) des encoches internes adjacentes (11) dans la direction axiale et l'extrémité externe (101), l'amplitude de décalage (R1 ou R3) ne dépassant pas 0,3 fois la distance M.
